(19)

**Europäisches Patentamt**

**European Patent Office**

**Office européen des brevets**

(11) **EP 4 477 894 A1**

(12) **EUROPEAN PATENT APPLICATION**

published in accordance with Art. 153(4) EPC

(43) Date of publication:
**18.12.2024 Bulletin 2024/51**

(21) Application number: **22923622.9**

(22) Date of filing: **27.12.2022**

(51) International Patent Classification (IPC):
**F15D 1/02** *(2006.01)* **F15D 1/04** *(2006.01)*
**F16L 55/027** *(2006.01)*

(86) International application number:
**PCT/CN2022/142273**

(87) International publication number:
**WO 2023/142836 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.01.2022 CN 202210097330**

(71) Applicants:
• **York Guangzhou Air Conditioning and
Refrigeration Co., Ltd.**
**Qingyuan, Guangdong 511685 (CN)**
• **Tyco Fire & Security GmbH**
**8212 Neuhausen am Rheinfall, Schaffhausen
(CH)**

(72) Inventors:
• **YANG, Yang**
**Qingyuan City, Guangdong 511685 (CN)**
• **WANG, Yong**
**Qingyuan City, Guangdong 511685 (CN)**
• **MEI, Lu**
**Qingyuan City, Guangdong 511685 (CN)**
• **CHEN, Jing**
**Qingyuan City, Guangdong 511685 (CN)**

(74) Representative: **Meissner Bolte Nürnberg
Patentanwälte Rechtsanwälte
Partnerschaft mbB
Bankgasse 3
90402 Nürnberg (DE)**

(54) **FLOW EQUALIZING DEVICE AND DIVERTING DEVICE**

(57) The present application relates to a flow equalizing device. The flow equalizing device comprises a pipeline (110) and at least two blades (101), wherein the pipeline (110) is cylindrical and has a central axis, the at least two blades (101) are arranged in the pipeline (110), and the at least two blades (101) are arranged along a helical line around the central axis, such that a fluid in the pipeline (110) can be divided into at least two streams of fluid to flow in a helical direction on the cross section of the pipeline (110). The at least two blades (101) are spaced apart from an inner wall of the pipeline (110) and/or the at least two blades (101) are provided with through holes, thereby forming a gap on the cross section of the pipeline, such that the at least two streams of fluid can circulate through the gap. The flow equalizing device of the present application can uniformly distribute a fluid in a circumferential direction of the pipeline, thereby equalizing flow.

FIG. 1A

# Description

## TECHNICAL FIELD

The present application relates to the field of flow equalizing devices, and in particular to a diverting device comprising a flow equalizing device.

## BACKGROUND ART

In the prior art, a fluid in a pipeline includes a liquid and a gas. Due to the differences in the density and velocity between the liquid flow and the gas flow, their distributions within the pipeline are also different, thereby leading to an uneven circumferential diverting of the liquid and the gas within the pipeline when the fluid exits the pipeline.

## SUMMARY OF THE INVENTION

Illustrative embodiments of the present application can solve at least some of the above problems.

According to a first aspect of the present application, the present application provides a flow equalizing device, which comprises a pipeline and at least two blades. The pipeline is cylindrical and has a central axis. The at least two blades are arranged in the pipeline, and the at least two blades are arranged along a helical line around the central axis, such that a fluid in the pipeline can be divided into at least two streams of fluid to flow in a helical direction on the cross section of the pipeline. The at least two blades are spaced apart from an inner wall of the pipeline and/or the at least two blades are provided with through holes, thereby forming a gap on the cross section of the pipeline, such that the at least two streams of fluid can circulate through the gap.

According to the flow equalizing device of the first aspect mentioned above, the radius of the inner wall of the pipeline is R, and the cross-sectional area of the pipeline is A. On any cross-section, the sum S of the unit areas of the gaps satisfies: $1/10 \leq S/A \leq 1/4$; and the shortest distance D between the gaps and the central axis satisfies: $D/R > 1/2$.

According to the flow equalizing device of the first aspect mentioned above, the edges of the at least two blades are in contact with the inner wall of the pipeline.

According to the flow equalizing device of the first aspect mentioned above, the sum S of the unit areas of the gaps is the sum of the areas of the through holes on the at least two blades on the surface of the unit number of turns of the blades.

According to the flow equalizing device of the first aspect mentioned above, the through holes are several circular holes and are evenly distributed circumferentially around the central axis along the pipeline.

According to the flow equalizing device of the first aspect mentioned above, each of the at least two blades has a rotation angle $\phi$ that satisfies: $25° \leq \phi \leq 75°$, where the rotation angle $\phi$ is the acute angle formed by the tangent at any point on the edges of the at least two blades and the cross-section of the pipeline.

According to the flow equalizing device of the first aspect mentioned above, the number of turns of rotation n of each of the at least two blades satisfies: $0.25 \leq n \leq 3$.

According to the flow equalizing device of the first aspect mentioned above, the distance K from the ends of the at least two blades to the outlet of the pipeline satisfies: $0.5R \leq K \leq 3R$.

According to the flow equalizing device of the first aspect mentioned above, the flow equalizing device further includes a shaft rod, which is formed by extending along the central axis, and the at least two blades are connected to the shaft rod.

According to a second aspect of the present application, the present application provides a diverting device, which includes the above-mentioned flow equalizing device, at least two diverting pipes, and a diverter. The inlet of the diverter is connected to the outlet of the pipeline, and the at least two outlets of the diverter are correspondingly connected to the inlets of the at least two diverting pipes.

The flow equalizing device of the present application can enable the fluid to have an equalized flow in the circumferential direction.

## BRIEF DESCRIPTION OF THE ACCOMPANYING DRAWINGS

The features and advantages of the present application can be better understood by reading the following detailed description with reference to the accompanying drawings. Throughout the drawings, the same reference numerals indicate the same components, where:

FIG. 1A is a perspective view of a flow equalizing device according to one embodiment of the present application;

FIG. 1B is a cross-sectional view of the flow equalizing device shown in FIG. 1A;

FIG. 2A is a perspective view of the flow equalizing device shown in FIG. 1A, wherein no pipeline is illustrated;

FIG. 2B is a front view of the flow equalizing device shown in FIG. 1A, wherein no pipeline is illustrated;

FIG. 3 is an expanded view of a blade of the flow equalizing device shown in FIG. 1A;

FIG. 4 is a cross-sectional view of a flow equalizing device according to another embodiment of the present application;

FIG. 5 is a cross-sectional view of a flow equalizing device according to yet another embodiment of the present application;

FIG. 6A is a perspective view of a diverting device according to the present application;

FIG. 6B is an axial cross-sectional view of the diverting device shown in FIG. 6A;

FIG. 7A is a simulation diagram of the flow rate of the fluid at an outlet of the pipeline of a diverting device with no gap;

FIG. 7B is a simulation diagram of the flow rate of a fluid at an outlet of the pipeline of a diverting device of the present application.

## DETAILED DESCRIPTION OF EMBODIMENTS

Various specific embodiments of the present invention will be described below with reference to the accompanying drawings, which form part of this specification. It should be understood that although directional terms, such as "front," "rear," "top," "bottom," "left," "right," and the like, are used in the present invention to describe the direction or orientation of various example structural parts and components of the present invention, these terms are used herein solely for the purpose of description and determined based on the example orientations shown in the drawings. Since the disclosed embodiments of the present invention can be arranged in different directions, these directional terms are used for explanatory purposes only and should not be construed as limiting. In the following drawings, the same reference numbers are used to denote the same parts.

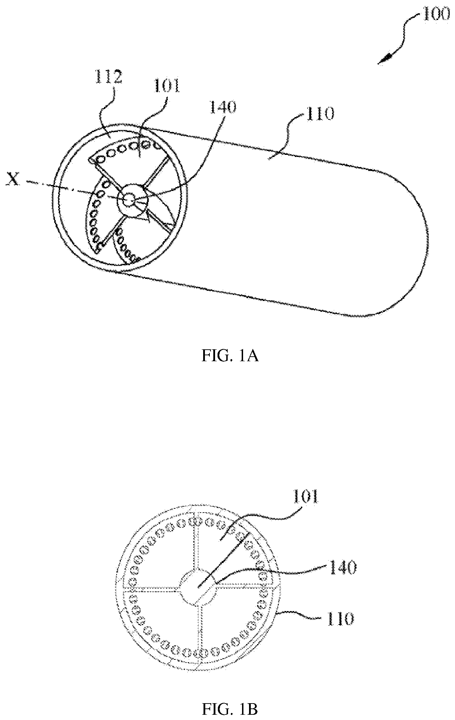

FIG. 1A is a perspective view of a flow equalizing device 100 according to one embodiment of the present application, and FIG. 1B is a cross-sectional view of the flow equalizing device 100 shown in FIG. 1A. As shown in FIGS. 1A-1B, the flow equalizing device 100 includes a pipeline 110, four blades 101, and a shaft rod 140. The pipeline 110 is cylindrical and has an inner wall 112. The pipeline 110 further comprises an inlet and an outlet at two ends, and has a central axis X. The shaft rod 140 is generally cylindrical, is formed by extending along the central axis X, and is coaxially arranged with the central axis X. The four blades 101 are connected to the shaft rod 140 and the pipeline 110.

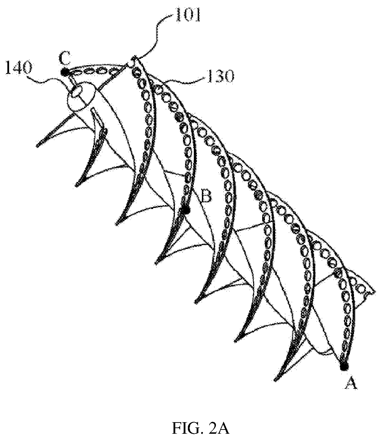

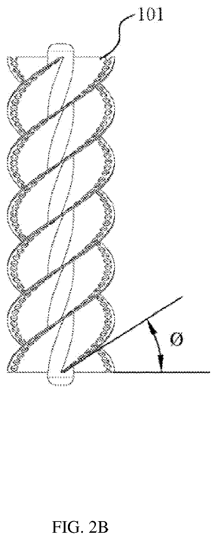

FIG. 2A is a perspective view of the flow equalizing device 100 shown in FIG. 1A, and FIG. 2B is a front view of the flow equalizing device 100 shown in FIG. 1A, in which the pipeline 110 is not shown, so as to illustrate the specific structure of the four blades 101 and the shaft rod 140. As shown in FIGS. 2A-2B, the four blades 101 are arranged around the central axis X in a helical pattern, so that the fluid in the pipeline 110 can be divided into four streams flowing in a spiral direction across the cross-section (i.e., the section in the radial direction) of the pipeline 110. Specifically, the four blades 101 are identical in structure and are evenly arranged in the circumferential direction of the pipeline 110. One side of each blade 101 is connected to (i.e., in contact with) the inner wall 112 of the pipeline 110, and the other side of each blade 101 is connected to (i.e., in contact with) the shaft rod 140, thereby forming four sector-shaped chambers inside the pipeline 110. Each blade 101 extends from one end of the shaft rod 140 to wind around the central axis X and rotates along the central axis X for a certain distance. When any point on the outer edge of a blade 101 (i.e., the side close to the pipeline 110) rotates 360°, the blade 101 completes one turn. As shown in FIG. 2A, point A on the blade 101 reaches point B after rotating 360° and point C after rotating an additional 180°. Thus, the blades 101 in the flow equalizing device shown in FIGS. 1A-2B complete one and a half turns (i.e., 1.5 turns).

In addition, the blades 101 have a rotation angle $\phi$. More specifically, the rotation angle $\phi$ is the acute angle formed by the tangent on the blade 101 at any point on the edge of the blade 101 and the cross-section of the pipeline 110. When each of the blades 101 has a rotation angle $\phi$ that satisfies $25° \leq \phi \leq 75°$, the blades 101 not only can divide the fluid in the pipeline 110 into four streams across the cross-section of the pipeline 110, but also can impart a good rotational velocity to the fluid, causing the liquid to stay close to the inner wall 112 of the pipeline 110 during the flow of the fluid.

Furthermore, the blade 101 is provided with circular holes 130. The circular holes 130 are arranged to penetrate the blade 101, such that two adjacent streams of the fluid are in communication through the circular holes 130. Several circular holes 130 are evenly distributed circumferentially around the central axis X along the pipeline 110. In other words, the center of each of the circular holes 130 is at the same distance from the central axis X, and the circumferential spacing between the several circular holes 130 is uniform. The shortest distance D from the circular holes 130 to the central axis X satisfies: D/R > 1/2, where R is the radius of the inner wall 112 of the pipeline 110. In addition, the sum S of the areas of the circular holes 130 on a single blade 101 on the surface of the unit number of turns satisfies: $1/10 \leq S/A \leq 1/4$, where A represents the cross-sectional area of the pipeline 110.

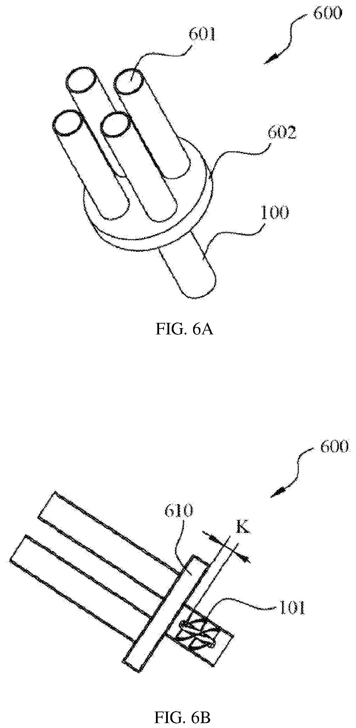

Furthermore, the distance K from the ends of the four blades 101 to the outlet of the pipeline 110 satisfies: $0.5R \leq K \leq 3R$ (as shown in FIG. 6B).

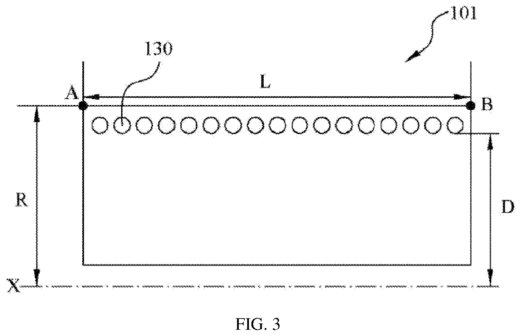

FIG. 3 is an expanded view of a blade 101 of the flow equalizing device 100 shown in FIG. 1A, where the length L of the blade is the length of one full turn of the blade 101. The blade 101 in FIG. 3 is the blade 101 in FIG. 1A that is straightened, so that the inner edge of the blade 101 is parallel to the central axis X. In actual manufacturing, as an example, a metal material can be shaped into the structure shown in FIG. 3, then the blade 101 is bent, and the blade 101 is connected to the shaft rod 140 and the pipeline 110.

As shown in FIG. 3, the centers of the circular holes 130 are arranged to be parallel to the central axis X, with a certain spacing between adjacent two circular holes 130. The distance D from the inner edge of the circular holes 130 to the central axis X satisfies: D/R > 1/2. The area of each circular hole 130 is M. There are i circular holes 130 per unit number of turns. Thus, for a single blade, the sum of the areas of the circular holes 130 per unit number of turns is S1 = i × M. The area sum S=S1

$$1/10 \leq \frac{i \times M}{A} \leq 1/4$$

satisfies .

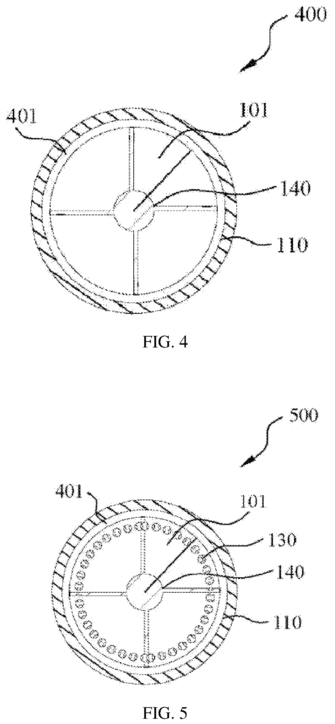

FIG. 4 is a cross-sectional view of a flow equalizing device 400 according to another embodiment of the present application. The flow equalizing device 400 shown in FIG. 4 is substantially the same as the flow equalizing device 100 shown in FIGS. 1A-2B, and the same portions will not be repeated. The flow equalizing device 400 shown in FIG. 4 is different from the flow equalizing device 100 shown in FIGS. 1A-2B in that in the flow equalizing device 100, the outer edges of the four blades 101 are in contact and connected with the inner wall 112 of the pipeline 110, thereby forming four independent chambers. These four independent chambers are in communication through several circular holes 130. However, in the flow equalizing device 400, the four blades 101 do not have circular holes 130 thereon, and there is a gap 401 between the outer edges of the four blades 101 and the inner wall 112 of the pipeline 110. The four blades 101 can generally divide the interior of the pipeline 110 into four chambers. These four chambers can be in communication through the gap 401. The unit area sum S2 of the gap 401 equals the annular cross-sectional area. The area sum is S=S2, and it satisfies: 1/10 ≤ S/A ≤ 1/4.

FIG. 5 is a cross-sectional view of a flow equalizing device 500 according to yet another embodiment of the present application. The flow equalizing device 500 shown in FIG. 5 is substantially the same as the flow equalizing device 100 shown in FIGS. 1A-2B, and the same portions will not be repeated. The flow equalizing device 500 shown in FIG. 5 is different from the flow equalizing device 100 shown in FIGS. 1A-2B in that in the flow equalizing device 100, the outer edges of the four blades 101 are in contact and connected with the inner wall 112 of the pipeline 110, thereby forming four independent chambers. These four independent chambers are in communication through several circular holes 130. However, in the flow equalizing device 500, there is a gap 401 between the outer edges of the four blades 101 and the inner wall 112 of the pipeline 110. The four blades 101 can generally divide the interior of the pipeline 110 into four chambers. These four chambers can be in communication through the gap 401 and several circular holes 130. The unit area sum of the gap 401 and the circular holes 130 S=S1 + S2 = i × M + S2, and it satisfies: 1/10 ≤ S/A ≤ 1/4.

A person skilled in the art can understand that, although circular holes 130 are illustrated in the present application, any shape of through holes falls within the scope of protection of the present application.

A person skilled in the art can understand that, although the present application illustrates that the center of each circular hole 130 is at the same distance from the central axis X, the arrangement where the circular holes 130 are radially arranged in at least one row also falls within the scope of protection of the present application.

A person skilled in the art can understand that, although several circular holes 130 shown in the present application are evenly distributed around the central axis X along the circumferential direction of the pipeline 110, other arrangements of any shape are also within the scope of protection of the present application.

A person skilled in the art can understand that the blades in the present application are described as having an outer contour (i.e., outer edge) that is circular in the sectional view. Therefore, even in some examples where the through holes are located at the edges of the blades, they still fall within the scope of the "through holes" described in the present application.

A person skilled in the art can understand that, although four blades 101 are shown in the present application, at least two blades 101 are within the scope of protection of the present application.

A person skilled in the art can understand that, although the shaft rod 140 is shown in the present application, the shaft rod 140 may not be provided in other examples, and at least two blades may be fixed and connected by other means.

A person skilled in the art can understand that, although the number of rotations n is shown as 1.5 in the present application, the number of rotations n can satisfy: 0.25 ≤ n ≤ 3 in other examples.

Thus, the present application provides a flow equalizing device, where there is a space between the blades and the inner wall of the pipeline and/or through holes are provided on the blades, thereby forming a gap on the cross section of the pipeline, such that the at least two streams of fluid can circulate through the gap.

The flow equalizing device of the present application has a simple structure and can achieve a uniform fluid flow in the circumferential direction. Specifically, in the flow equalizing device, at least two blades are helically arranged to substantially divide the interior of the pipeline 110 into at least two independent chambers. Before a fluid comprising a liquid and a gas enters the flow equalizing device, the diverting of the liquid and the gas is not regular. Once the fluid enters the flow equalizing device, it flows in a generally helical pattern. Since the density of the liquid is higher than the density of the gas, the liquid is positioned close to the inner wall of the pipe, while the gas is positioned close to the central axis X. When the liquid is unevenly distributed in the circumferential direction, it can flow between the chambers through the through holes or space (i.e., gaps), thereby leading to an annular diverting in the circumferential direction and thus achieving an effect of an even diverting of the liquid in the circumferential direction. In addition, since the liquid is distributed in an annular shape in the circumferential direction, the gas can also be concentrated near the central axis X and distributed evenly in the circumferential direction. Moreover, the flow equalizing device of the present application can also reduce the pressure drop of the fluid while equalizing the flow. Specifically, in the prior art, a diverting device can mix a gas and a liquid thoroughly and then divide the flow. However, compared with the flow equalizing device of the present application, the diverting device in the prior art may lead to energy loss in the fluid, resulting in a great pressure drop.

FIG. 6A is a perspective view of a diverting device 600 according to the present application, and FIG. 6B is an axial cross-sectional view of the diverting device shown in FIG. 6A. As shown in FIGS. 6A-6B, the diverting device 600 comprises a flow equalizing device, four diverting pipes 601, and a diverter 602. The flow equalizing device may be any of the flow equalizing devices within the scope of protection of the present application. The diverter 602 is generally disc-shaped with a certain thickness and can form a diverter chamber 610. An inlet and four outlets are provided on two sides of the diverter 602, respectively, and are in communication with the diverter chamber 610. The inlet of the diverter 602 is connected to the outlet of the flow equalizing device (i.e., the outlet of the pipeline 110), and the four outlets of the diverter 602 are connected to the inlets of the four diverting pipes 601, respectively, so that the fluid entering the flow equalizing device through its inlet (i.e., the inlet of the pipeline 110) can flow into the diverter 602. The fluid then flows radially within the diverter 602 and enters the four diverting pipes 601. Since the flow equalizing device of the present application can achieve a uniform distribution of liquid and gas in the circumferential direction, when the fluid flows into the diverter 602, the quantities of the liquid and the gas can be evenly distributed among the four diverting pipes 601.

As one application, when the diverting device 600 is placed upstream of at least two heat exchangers, it not only can distribute the liquid and the gas evenly to each heat exchanger, so that all heat exchangers achieve uniform heat exchange, but also can reduce the liquid pressure drop before entering the heat exchangers.

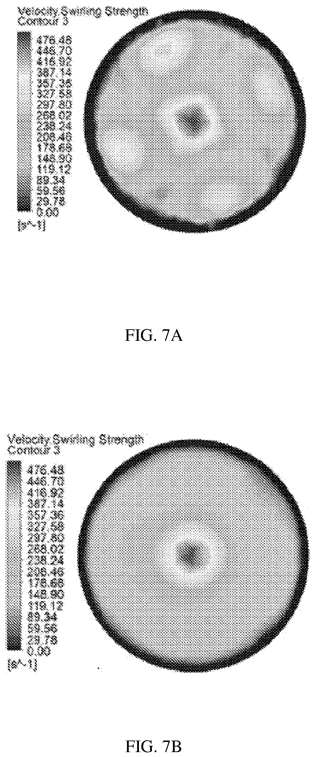

A person skilled in the art can understand that, although the diverter 602 is depicted as generally disc-shaped in the present application, any shape (e.g., conical) of the diverter falls within the scope of protection of the present application, as long as the diverter includes one inlet and at least two outlets. FIG. 7A is a simulation diagram of the flow rate of the fluid at an outlet of the pipeline of a diverting device with no gap. FIG. 7B is a simulation diagram of the flow rate of a fluid at an outlet of the pipeline of a diverting device of the present application. In the diverting device shown in FIG. 7A, the blades are connected to the shaft rod and the inner wall of the pipeline with no gap provided. In the diverting device shown in FIG. 7B, the blades are connected to the shaft rod and the inner wall of the pipeline with gap provided. More specifically, through holes are provided on the blades thereof. As can be seen from FIGS. 7A and 7B, the fluid distribution in FIG. 7A is uneven. Although four fluid streams can be substantially formed under the guidance of the helical blades, substantially still four streams remain at the outlet of the pipeline, leading to poor fluid diverting. While in FIG. 7B, the fluid forms substantially four streams under the guidance of the helical blades, but due to the presence of gaps, the fluid can be evenly distributed circumferentially at the outlet of the pipeline.

While the present disclosure has been described in conjunction with the examples of the embodiments mentioned above, various alternatives, modifications, variations, improvements, and/or equivalent solutions, whether known or foreseeable in the near future, may be readily apparent to those skilled in the art. Furthermore, the technical effects and/or technical problems described in this specification are exemplary and not limiting; therefore, the disclosure in this specification may be applied to other technical problems and achieve other technical effects and/or may solve other technical problems. Therefore, the examples of the embodiments of the present disclosure described above are intended to be illustrative and not restrictive. Various changes can be made without departing from the spirit or scope of the present invention. Therefore, the present disclosure is intended to cover all known or previously developed alternatives, modifications, variations, improvements, and/or equivalent solutions.

**Claims**

1.   A flow equalizing device,

     **characterized in that**
     the flow equalizing device comprises:

          - a pipeline (110), wherein the pipeline (110) is cylindrical and has a central axis; and
          - at least two blades (101), wherein the at least two blades (101) are arranged in the pipeline (110), and the at least two blades (101) are arranged along a helical line around the central axis, such that a fluid in the pipeline (110) can be divided into at least two streams of fluid to flow in a helical direction on the cross section of the pipeline (110);

          wherein there is a space (401) between the at least two blades (101) and an inner wall (112) of the pipeline (110) and/or the at least two blades (101) are provided with through holes, thereby forming a gap on the cross section of the pipeline (110), such that the at least two streams of fluid can circulate through the gap.

2. The flow equalizing device according to claim 1, **characterized in that**

   - the radius of the inner wall (112) of the pipeline (110) is R, and the cross-sectional area of the pipeline (110) is A;
   - on any cross-section, the sum S of the unit areas of the gaps satisfies:

$$1/10 \leq S/A \leq 1/4;$$

   and
   - the shortest distance D between the gaps and the central axis satisfies:

$$D/R > 1/2.$$

3. The flow equalizing device according to claim 2, **characterized in that** the edges of the at least two blades (101) are in contact with the inner wall (112) of the pipeline (110).

4. The flow equalizing device according to claim 3, **characterized in that** the sum S of the unit areas of the gaps is the sum of the areas of the through holes on the at least two blades (101) on the surface of the unit number of turns of the blades (101).

5. The flow equalizing device according to claim 4, **characterized in that** the through holes are several circular holes and are evenly distributed circumferentially around the central axis along the pipeline (110).

6. The flow equalizing device according to claim 1, **characterized in that**

   each of the at least two blades (101) has a rotation angle $\phi$ that satisfies:

$$25° \leq \phi \leq 75°;$$

   where the rotation angle $\phi$ is the acute angle formed by the tangent on the blades (101) at any point on the edges of the at least two blades (101) and the cross-section of the pipeline (110).

7. The flow equalizing device according to claim 1, **characterized in that** the number of turns of rotation n of each of the at least two blades (101) satisfies: $0.25 \leq n \leq 3$.

8. The flow equalizing device according to claim 1, **characterized in that** the distance K from the ends of the at least two blades (101) to the outlet of the pipeline (110) satisfies: $0.5R \leq K \leq 3R$.

9. The flow equalizing device according to claim 1, **characterized in that** the flow equalizing device further comprises:

   - a shaft rod (140), the shaft rod (140) being formed by extending along the central axis, and the at least two blades (101) being connected to the shaft rod (140).

10. A diverting device, **characterized in that** the diverting device comprises:

    - the flow equalizing device according to any one of claims 1-9;
    - at least two diverting pipes (601), and
    - a diverter (602), wherein the inlet of the diverter (602) is connected to the outlet of the pipeline (110), and the at least two outlets of the diverter (602) are correspondingly connected to the inlets of the at least two diverting pipes (601).

FIG. 1A

FIG. 1B

FIG. 2A

FIG. 2B

FIG. 3

FIG. 4

FIG. 5

FIG. 6A

FIG. 6B

FIG. 7A

FIG. 7B

## INTERNATIONAL SEARCH REPORT

| International application No. |
| --- |
| **PCT/CN2022/142273** |

**A. CLASSIFICATION OF SUBJECT MATTER**

F15D1/02(2006.01)i;F15D1/04(2006.01)i;F16L55/027(2006.01)i

According to International Patent Classification (IPC) or to both national classification and IPC

**B. FIELDS SEARCHED**

Minimum documentation searched (classification system followed by classification symbols)

F15D,F16L

Documentation searched other than minimum documentation to the extent that such documents are included in the fields searched

Electronic data base consulted during the international search (name of data base and, where practicable, search terms used)

CNABS, CNTXT, CNKI: 均流, 分流, 混合, 管道, 管路, 叶片, 孔, 螺旋, 空隙, 间距, 气相, 液相; VEN: uniform flow, split flow, mix???, pipe, blade?, hole?, spiral?, spac+, gas phase, liquid phase

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110671565 A (BEIJING UNIVERSITY OF CIVIL ENGINEERING AND ARCHITECTURE) 10 January 2020 (2020-01-10) description, paragraphs 19-64, and figures 1-6 | 1, 10 |
| Y | CN 111569687 A (SHANGHAI CANYUE CHEMICAL SCIENCE & TECHNOLOGY CO., LTD.) 25 August 2020 (2020-08-25) description, paragraphs 38-79, and figures 1-7 | 1, 10 |
| PX | CN 114542555 A (YORK GUANGZHOU AIR CONDITIONING REFRIGERATION EQUIPMENT LTD. COMPANY; INTELLECTUAL PROPERTY CONTROLLED LTD. LIABILITY PARTNERSHIP COMPANY FOR AUTOMATIC CONTROL OF JIANSEN) 27 May 2022 (2022-05-27) description, paragraphs 15-50, and figures 1-7 | 1-10 |
| A | CN 103736410 A (BEIJING UNIVERSITY OF CHEMICAL TECHNOLOGY) 23 April 2014 (2014-04-23) entire document | 1-10 |

| ☑ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **06 March 2023** | **18 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/142273**

**C.    DOCUMENTS CONSIDERED TO BE RELEVANT**

| Category* | Citation of document, with indication, where appropriate, of the relevant passages | Relevant to claim No. |
|---|---|---|
| A | CN 108591195 A (719TH RESEARCH INSTITUTE OF CHINA SHIPBUILDING INDUSTRY CORPORATION) 28 September 2018 (2018-09-28)<br>entire document | 1-10 |
| A | CN 107906086 A (CHANGZHOU UNIVERSITY) 13 April 2018 (2018-04-13)<br>entire document | 1-10 |
| A | CN 111359466 A (EAST CHINA UNIVERSITY OF SCIENCE AND TECHNOLOGY) 03 July 2020 (2020-07-03)<br>entire document | 1-10 |
| A | CN 202893218 U (CHONGQING UNIVERSITY) 24 April 2013 (2013-04-24)<br>entire document | 1-10 |
| A | CN 206724528 U (GUANGDONG MIDEA HEATING & VENTILATION EQUIPMENT CO., LTD.; MIDEA GROUP CO., LTD.) 08 December 2017 (2017-12-08)<br>entire document | 1-10 |
| A | CN 209131738 U (CHONGQING ENDURANCE INDUSTRY STOCK CO., LTD.) 19 July 2019 (2019-07-19)<br>entire document | 1-10 |
| A | CN 108591195 A (719TH RESEARCH INSTITUTE OF CHINA SHIPBUILDING INDUSTRY CORPORATION) 28 September 2018 (2018-09-28)<br>entire document | 1-10 |
| A | EP 3173748 A1 (TP REFLEX GROUP S P A) 31 May 2017 (2017-05-31)<br>entire document | 1-10 |
| A | JP 2011092838 A (OSAKA GAS CO., LTD.) 12 May 2011 (2011-05-12)<br>entire document | 1-10 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 110671565 | A | 10 January 2020 | None | | | |
| CN | 111569687 | A | 25 August 2020 | None | | | |
| CN | 114542555 | A | 27 May 2022 | None | | | |
| CN | 103736410 | A | 23 April 2014 | None | | | |
| CN | 108591195 | A | 28 September 2018 | None | | | |
| CN | 107906086 | A | 13 April 2018 | None | | | |
| CN | 111359466 | A | 03 July 2020 | None | | | |
| CN | 202893218 | U | 24 April 2013 | None | | | |
| CN | 206724528 | U | 08 December 2017 | None | | | |
| CN | 209131738 | U | 19 July 2019 | None | | | |
| EP | 3173748 | A1 | 31 May 2017 | ITUB | 20155897 | A1 | 25 May 2017 |
| | | | | PL | 3173748 | T3 | 02 November 2020 |
| JP | 2011092838 | A | 12 May 2011 | None | | | |